# EUROPEAN PATENT SPECIFICATION

(11) **EP 3 335 345 B1**
(45) Date of publication and mention of the grant of the patent: **26.05.2021**
(21) Application number: 16816763.3
(22) Date of filing: 31.10.2016
(51) Int. Cl.: H04L 1/00

(54) **RANDOM NETWORK CODING IN ORTHOGONAL FREQUENCY DIVISION MULTIPLE ACCESS (OFDMA) NETWORKS USING CONTROL SIGNALING**
NETZWERKZUFALLSCODIERUNG IN OFDMA-NETZWERKEN MITHILFE VON STEUERSIGNALISIERUNG
CODAGE DE RÉSEAU ALÉATOIRE DANS DES RÉSEAUX À ACCÈS MULTIPLE PAR RÉPARTITION ORTHOGONALE DE LA FRÉQUENCE (OFDMA) UTILISANT UNE SIGNALISATION DE COMMANDE

(30) Priority: 23.11.2015 TR 201514750
(43) Date of publication of application: 20.06.2018
(73) Proprietor: Ozyegin Universitesi, 34794 Istanbul (TR); Istanbul Teknik Universitesi, 34469 Istanbul (TR)
(72) Inventor: UYSAL, Murat, 34794 Istanbul (TR); KARABULUT KURT, Gunes Zeynep, Istanbul (TR); TEDIK BASARAN, Semiha, Istanbul (TR); ALTUNBAS, Ibrahim, Istanbul (TR)
(74) Representative: Coral, Nükhet Serra Yardimci
(86) International application number: PCT/TR2016/050410
(87) International publication number: WO 2017/091177

(56) References cited:
- WO-A2-2010/126312
- HONG XU ET AL: "XOR-Assisted Cooperative Diversity in OFDMA Wireless Networks: Optimization Framework and Approximation Algorithms", INFOCOM 2009. THE 28TH CONFERENCE ON COMPUTER COMMUNICATIONS. IEEE, IEEE, PISCATAWAY, NJ, USA, 19 April 2009 (2009-04-19), pages 2141-2149, XP031468977, ISBN: 978-1-4244-3512-8
- KIM DONGKYU ET AL: "A Survey of In-Band Full-Duplex Transmission: From the Perspective of PHY and MAC Layers", IEEE COMMUNICATIONS SURVEYS & TUTORIALS, vol. 17, no. 4, 18 November 2015 (2015-11-18), pages 2017-2046, XP011590601, DOI: 10.1109/COMST.2015.2403614 [retrieved on 2015-11-18]
- YUAN LIU ET AL: "An Auction Approach to Distributed Power Allocation for Multiuser Cooperative Networks", IEEE TRANSACTIONS ON WIRELESS COMMUNICATIONS, IEEE SERVICE CENTER, PISCATAWAY, NJ, US, vol. 12, no. 1, 1 January 2013 (2013-01-01), pages 237-247, XP011489090, ISSN: 1536-1276, DOI: 10.1109/TWC.2012.121112.112284

## Description

### FIELD OF INVENTION

The present invention proposes a system composed of several source and destination nodes that can communicate at a high performance without compromising the spectral efficiency. The system applies random network coding, cooperative communication and orthogonal frequency division multiple access (OFDMA) techniques forth high performance. Network coding is combining relay. The main idea behind network coding is contradictory to the independent processing of data, where relay nodes (routers) mainly process the packets and then forward them, instead of the simple store and forward architecture. The network coding has the potential to address the ever increasing number of users and devices in cellular networks.

Furthermore, the proposed system can also function in a two-way communication setup (node A can transmit data to node B whereas the node B also simultaneously transmits data to node A). The arrangement can also be reduced to a single transmitter and a single receiver scenario. Such a system can be used in wireless sensor networks, wireless local area networks and OFDMA based cellular communication networks such as LTE or LTE-Advanced.

### BACKGROUND ART

Major structural changes are expected to take place in the next generation Internet. This next generation Internet, Internet of Things (IoT) paradigm is still under development. One of the certain aspects about the ongoing research activities regarding IoT is the fact that the number of transmitting and receiving devices will be quite high [1]. The conventional communication systems being designed targeting the resource allocations with single transmitter-receiver pair links will be insufficient with this ever increasing number of devices.

The state of the art is summarized and concludes that a two-way cooperative random network Coded OFDMA-system is not yet being studied.If the system consists of two transmitter/receiver nodes (A and B) and random network coding (RNC) is used for combining each transmitter's data. Hence the receivers (A and B) decode the network coded symbols according to the coding matrix. The network coding is done across the individually transmitted information symbols or packets.

A protocol is proposed in [2] based on one-way multicarrier RNC systems that minimizes the frame error rate while reducing the transmission delay. But does not include any gain from cooperative communication or take into account the impacts of the wireless fading channel. In [3], authors propose a methodology to recover correctly received symbols within a frame in RNC systems. This method targets only the medium access control (MAC) layer (i.e. layer 2). The impacts of the wireless channel or the relay selection mechanisms were not considered. The authors in [4] have applied RNC to OFDM systems to reduce the peak to average power ratio (PAPR) and also reduce transmission error rates.

Deterministic network coding is applied tithe OFDMA systems in [5], performing together with dynamic subcarrier allocation and the associated performance improvement is quantified. Similarly, in [6] the authors perform resource scheduling in a deterministic network coded system according to the wireless channel conditions. In [5, 6], the performance gains due to combined network coding and subcarrier assignment procedures are quantified, demonstrating the positive approaches.

In [7], the authors show that through the use of deterministic network coding, the erroneous packets in the orthogonal frequency division multiplexing (OFDM) systems can be recovered, reducing the overall error rate of the system. In [8], the performance of a multi-carrier deterministic network coded system is investigated, and an approach combining the routing and the network coding is proposed.

The use of deterministic network coding in 4G standards, in particular, LTE-Advanced, is proposed in [9]. There are also related works in the literature integrating network coding to LTE and WiMAX standards [10-12]. The authors in [12] investigate the scalability of an LTE network in the presence of increasing number of devices while also considering the deterministic network coding.

In [10, 11] OFDMA systems that make use of RNC are investigated, where RNC is utilized to increase the throughput values. These works do not consider subcarrier allocation or power allocation perspectives. In [13], the authors propose a RNC based OFDMA system that makes use of subcarrier allocation through a heuristic approach. This work does not consider the power allocation or the relay selection techniques. In [14], the performance of one way RNC system is investigated in the MAC layer, without considering the impact of the physical layer conditions (i.e. wireless channel condition) and this system is proposed to improve the performance of LTE-Advanced systems.

The majority of the related literature targets one-way communication systems [2-13, 15-17]. The two-way systems are taken into account in [18-21]. However, these works do not include RNC aspects. Hence, there is a visible gap in the literature combining OFDMA systems with RNC. In this invention, the objective is to design a random network coded two-way OFDMA systems. An optimization framework for considering optimizing of a cross-layer perspective; namely over the physical layer, MAC layer and network layer, and to optimise the transmission power levels, the subcarriers are to be allocated and relay nodes to be active in the transmission process.

MIT US8102837B2 titled "Network coding approach to rapid information dissemination" details the network coding techniques. The proposed approach is not directly applicable to wireless network infrastructures [22]. The RNC as used in the present invention is patented again by MIT US8046426. Similar to [22], the presented invention is not specialized towards wireless environments.

There are one-way communication network coded systems. US 7660301 B2 titled "System and method for network coding and/or multicast" proposes the extension of network coding to wireless networks. This invention does not contain an OFDMA based approach or cross-layer optimization framework.

US8040836B2 titled "Local network coding for wireless networks" describes the application of network coding on network devices, without considering OFDMA properties.

US8792539B2 titled "Multiplicative network coding" targets the wireless communication networks, mainly considering a single source destination pair [23].

US8358608 titled "Method and apparatus for HARQ operation with network coding" demonstrates that the network coding approaches can improve system's efficiency and performance for a single source node.

US8228835B2 titled "MIMO based network coding network" illustrates a single source node is considered and a network coding architecture is proposed for a single source and destination pair. Also, this invention does not include OFDMA and a single source-destination pair is considered in the Patent filed by LG Electronics US8527848B2.

In the current state of the art, to implement two-way communication channels, physical layer network coding (PNC) or analog network coding (ANC) techniques are frequently resorted to. In these techniques, the numbers of source nodes are fixed to two. The ANC or PNC techniques significantly differ from the conventional network coding techniques that it is applied only in the physical layer. In EP2264929 titled "A data transmission method using OFDM, Physical Layer Network Coding, and decoding of a signal superposition", such an invention is described. This system makes use of OFDM but not OFDMA, enabling multiple users to share an OFDM symbol [24].

US20120300692A1 titled "Method and apparatus for a two-way relaying scheme with physical layer network coding" describes the two-way communication system limited to ANC/PNC techniques.

There are also Patent applications targeting the reduction of PAPR in OFDMA systems. These approaches can be used to improve energy efficiency of a single transmitter but do not include a comprehensive network view.

Hong Xu Et Al titled "XOR-Assisted Cooperative Diversity in OFDMA Wireless Networks: Optimization Framework and Approximation Algorithms" discloses a single-cell OFDMA wireless network. BS is communicating with each MS with bi-directional traffic. The system operates in FDD mode, meaning that the uplink and downlink of an MS are assigned orthogonal sets of data subchannels. A small number of RS are employed in the cell to provide cooperative diversity.

Also; WO2010126312 titled "Method for relaying data in multi-hop cellular system discloses a cellular system that includes at least one terminal, a terminal selected from the at least one terminal for operating as a relay depending on circumstances, and a base station configured to demodulate and decode signals received from the at least one terminal and the relay terminal so as to extract original uplink information sent from terminals based upon the demodulated or decoded signals.

The most relevant Patent with this disclosure is US20120257695A1 titled "Network Coding Method and Device in Cooperative Communication". In this Patent, the invention targets OFDM systems instead of OFDMA, without covering a two-way architecture or cross-layer optimization components. Hence, the proposed system is limited in terms of performance and spectral efficiency improvement.

This invention disclosure, mainly targeting wireless communication networks, aims to address the resource insufficiency problems in the current networks in densely deployed networks. The system aims to increase the overall system capacity and end-to-end throughput by using subcarrier and power allocation with relay selection. Additionally, improves the outage and symbol error performance of the two-way relay channel networks.

Relay aided communication is an essential part of the future densely deployed wireless communication networks to enhance transmission reliability while improving the radio resource usage efficiency. The target system, random network Coded OFDMA systems (RNC-OFDMA) has the potential to be a part of 5G communication standards. This proposed system architecture can be used in several distinct networks within the scope of IoT or wireless sensor networks, where there are multiple source/destination pairs, sharing the same radio resources (such as spectrum). The target network coded system can also increase the overall throughput by reducing the total transmission time, hence increasing spectral efficiency. The main functionality of the proposed system is to propose a cross-layer optimization framework for network coded systems (mainly targeting the physical layer, MAC layer, and network layer) and to improve the energy efficiency. This flexible design also enables to tune the transmission rates, providing a trade-off between the throughput and reliability.

The related system and applications of the present network coded system being used to determine the transmit power levels and reduce the PAPR values, hence avoiding a well-known problem associated with OFDM architecture. The transmitter and receiver architectures of the invention can be extended to filter bank multicarrier based architectures instead of OFDMA based ones. Broadcast and relaying phases can be reduced to a single time slot. In this implementation, the relaying phase can submit the symbols associated with a delayed time slot using frequency division multiplexing. The proposed optimization framework can also be used for network code design. The random network code coefficients in the proposed systems are generated using a deterministic function (such as a PN generator). Thus, eliminates the requirement of transmission of coding coefficients over the communication channels. When the random network codes are not generated using a different architecture, then the network codes can be appended to the start or the end of the transmitted frame, similar to the architectures proposed in the literature.

Deterministic network codes, such as maximum distance separable (MDS) codes can be used instead of random network codes in the proposed system. Also, can make use of PNC or ANC. PNC/ANC is for combining each user's data at the relay nodes instead of network coding or RNC.The system can be extended to use adaptive modulation and coding. Hence the overall data transmission rates can be further increased.

### SUMMARY OF THE INVENTION

The present invention is a system and a method of two-way cooperative communication as defined in independent claim 1 and in independent claim 9, respectively. Further details are defined in the dependent claims.

### BRIEF DESCRIPTION OF THE DRAWINGS

Figure 1(a) depicts the complete system of the invention combined with Figure 1(b) single transmitter/receiver to illustrate the disadvantage.
Figure 2(a) shows the Transmitter Unit of the system.
Figure 2(b) shows the Receiver Unit of the system.
Figure 3 shows the flowchart of the system process.
Figure 4 shows an example of Random Network Coding (RNC).
Figure 5 shows the graphical representation of improved performance.
Figures 6(a) and 6(b) shows the transmission scheme of two times required and the transmission scheme of one time required respectively.

### DETAILED DESCRIPTION OF THE EMBODIMENTS

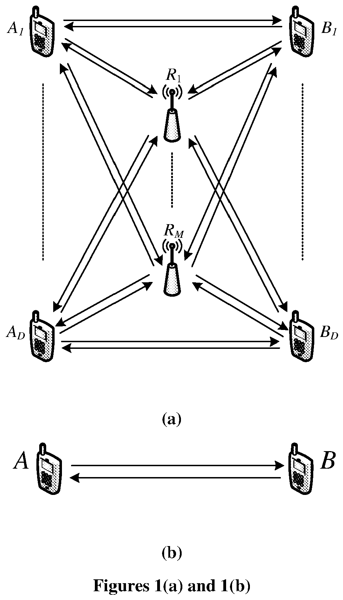

**Figure 1 (a)** shows a model of the two-way cooperative communication system consisting of transceiver nodes. The system is composed of 2D source/destination nodes **110a**, **110b, 111a, 111b** and M relay nodes **112a, 112b.** The relay nodes aids in the communication between the source/destination nodes and can be used to, 1) perform cooperative communications, 2) enhance coverage area, 3) reduce the total transmit power and 4) reduce the error or service outage rates. The relay nodes are already being used in the recent communication standards. **Figure 1(b)** shows the system consisting of two transmitter/receiver nodes **A** and **B,** RNC is used for combining each transmitter's data. The network coding is done across individually transmitted information symbols or packets. Hence the receivers A and B decode the network coded symbols according to coding matrix.

The system's performance between source and destination nodes 110a, 110b, 111a, 111b will be monitored using two distinct approaches. The first approach is to monitor the overall performance by using a centralized Control Unit. This centralized Control Unit generates the required signal to enable synchronization among the communicating nodes and also measures and monitors the system's performance. In the second approach, the pilot symbols transmitted by the communicating nodes will be used for synchronization and the performance is measured and monitored in a distributed sense. The performance monitoring metrics can be selected as the overall system capacity, the end to end throughput, the outage probability or symbol error rate, which are also used targeting metrics for optimization framework.

There are two defined phases in the data transmission. The first phase is the broadcast phase. On this phase, all the transmitting nodes makes use of their assigned OFDMA subcarriers and determines their transmit power values and bit rates. These parameters are established either by using an optimization framework, targeting a specific performance metric or by using heuristic approaches. The transmitted signals are received jointly by the relay and the destination nodes. The second phase is frequently referred to as the relaying phase, where the relay nodes transmit network coded symbols to destination nodes. In the proposed system, the relay nodes first estimate the transmitted symbols by the source nodes and then perform network coding on the estimated symbols to generate their signals to be transmitted. The network coded symbols are obtained using random network code coefficients. Hence, network coding is integrated to the proposed system.

At the end of these two phases the destination nodes obtain distinct versions of the source nodes' symbols. At each destination nodes, detectors such as zero forcing, minimum mean square error, maximum likelihood or maximum a posteriori can be used jointly with network decoding block. The relay nodes to be selected to aid communication are determined by the performance monitoring and optimization unit. Based on the channel conditions, transmission of some relay nodes is avoided (or partially utilized) to eliminate any probable error propagation. This functionality will enable to include relay selection techniques in the proposed system.

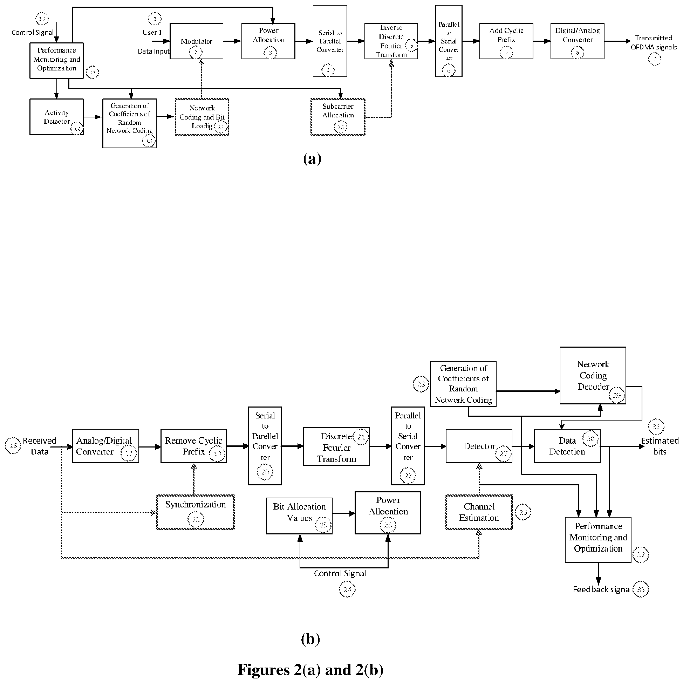

**Figure 2(a) and 2(b)** shows the Transmitter and Receiver sub-blocks. **1-15** are related to the Transmitter and **16-33** are functionalities of the Receiver. The Transmitter and Receiver units operate in a coordinated fashion.

The information symbols to be transmitted are fed as Data Input 1. These data are passed to a Modulator block **2,** also by using the appropriate modulation order. The modulation order is determined according to the output of Performance Monitoring and Optimization 11 block. Activity Detector **12** block determines whether the transmitter will be selected to participate in the transmission process. This Activity Detector **12** functions solely on the relay nodes (not on the source nodes) and enables performance optimization through integration of relay selection techniques in the network. Thus, the source nodes are always kept active as long as there is data to be transmitted. The use of linear RNC is integrated to the transceiver by Generation of Coefficients of RNC **13,** and Network Coding and Bit Loading **14.** A communication link between all transceiver units that will perform network coding can be enabled by the use of a centralized Control Signal or through distributed pilot symbol transmissions. This link can be used for clock signal or synchronization. This signal is referred to as Control Signal **10** and is essential for the system. The Control Signal **10** can be used by the relay nodes to generate the RNC coefficients. In distributed control scenario, the pilot symbols transmitted by the communicating nodes will be used for synchronization and the performance is measured and monitored in a distributed sense. Hence, the frame structure of the transmitted signal changes. On the other hand, the signalling for synchronization between relay nodes can be reduced due to decreasing requirement of feedback signals.

The centralized Control Unit requires channel gains of all links as an input. It generates the required signal to enable synchronization among communicating nodes and coding matrix as output.A deterministic function is used on this time varying control signal to generate seed values, in a time varying fashion. An example of such a deterministic function is a pseudo-noise (PN) generator. By identifying the transmitter device, the receiver can use this function on the Control Signal 10 to reconstruct the network coding coefficients. Hence, the coding coefficients need not be transmitted through a separate feedback channel.The Generation of Coefficients of RNC 13 can also estimate and monitor the power of the data symbols that will be converted to transmitted signals over the antenna. As an example, if this power is above a pre-determined power threshold level, then new random coefficients can be produced, with a known functionality, for example by appending a pre-determined bit sequence to the frame. In this case, the receiver which is also aware of such functionality can recode the network coding coefficients. Such a procedure can be used to alleviate the PAPR problem of the OFDM/OFDMA systems.

The Subcarrier Allocation **15** assigns the subcarriers to each user according to the measurements from Performance Monitoring and Optimization block **11** to enhance the target performance metric, (as determined by the Performance Monitoring and Optimization **11** block). The blocks **4-**9 (that has Serial to Parallel Converter **4,** Inverse Discrete Fourier Transform (DFT) **5,** Parallel to Serial Converter **6, 22,** Add Cyclic **Prefix7,** Digital/Analog Converter (DAC) **8** and Transmitted OFDMA signals **9)** are the blocks that are readily available in the operational OFDMA transmitters. Based on the quality of the transmission channels, the Power Allocation **3** determines the power levels to be allocated to the selected subcarriers and contributes to increase the energy efficiency. TheSerial to Parallel Converter **4** converts the signals from serial to parallel, the length are determined according to the number of allocated subcarriers. The Inverse DFT **5** takes the Inverse DFT to obtain OFDMA signal in the time domain. The Parallel to Serial Converter **6, 22** converts the signals from parallel to serial. The Add Cyclic **Prefix7** appends a prefix (or a suffix) to the time domain OFDMA signal to avoid any destructive impact that can be observed due to the channel's delay spread. Thus, facilitates equalization at the receiver. The DAC **8** converts the digital signal to analog. This signal is then up-converted to RF signal and transmitted through an antenna. The OFDMA signals of distinct users are super positioned over the air while being transmitted through the wireless channel by the transmitted OFDMA signals **9.**

The blocks **10, 11, 12, 13, 15** enable cross-layer optimization by setting up a control mechanism on the system performance. On the Receiver side, the uniqueness to the OFDMA receivers is integrated by the use of **24, 28, 30, 32, 33.** These blocks invert the functionalities defined on the transmitter side and target to detect the transmitted data at a high reliability (such as low error probability or outage probability rates). **24** represent the input location of the Control Signal. The other blocks and their functions are Analog/Digital Converter (ADC) **17** to convert analog signals to digital by passing them through a sampler and quantizer, Synchronization **18** module estimates time and frequency offsets and targets to reduce their performance degrading effects, Remove Cyclic Prefix **19** removes the cyclic prefix signal appended to the time domain OFDMA signal in **7,** Serial to Parallel Converter **20** converts the signals from serial to parallel, DFT **21** takes the DFT to reconstruct OFDMA signal in the frequency domain, Channel Estimation **23** performs channel estimation with the aid of pilot symbols, Bit Allocation Values **25** passes the number of allocated bits to Detector, the Detector **27** estimates the data symbols transmitted through the wireless communication channel. Generation of Coefficients of RNC **28** same as in the transmitter **13** targets to reconstruct the network coding coefficients before they are decoded by the Network Coding Decoder **29,** eliminating the requirements for a feedback channel for these coefficients. The Network Coding Decoder **29** decodes the network coded data and the output of it is fed into Data Detection **30.** The existing detection techniques in the literature, such as zero forcing, minimum mean square error, maximum likelihood or maximum a posteriori detection can beused along soft detection techniques at 30 and Estimated bits 31 that reconstructs the Transmitted information bits.As in the case of the transmitter, the Control Signal 24 will also be used to generate the network coding coefficients. The Power Allocations 26 are again determined as per the Control Signal. The Generation of Coefficients of RNC 28 can enable generation of the used RNC coefficients, in a similar fashion to Generation of Coefficients of RNC 13 at the transmitter. The Data Detection block **30** enables high-reliability detection of the Estimated bits **31** from all source nodes, combining the received signals **16** obtained from the two-phase transmission protocol.

The performance of the system is tracked by the Performance Monitoring and Optimization **32** block. The output of this block which is the Feedback Signal **33,** is fed into the transmitter of the target transceiver unit, enabling the existence of the optimization framework information such as the channel quality or throughput.

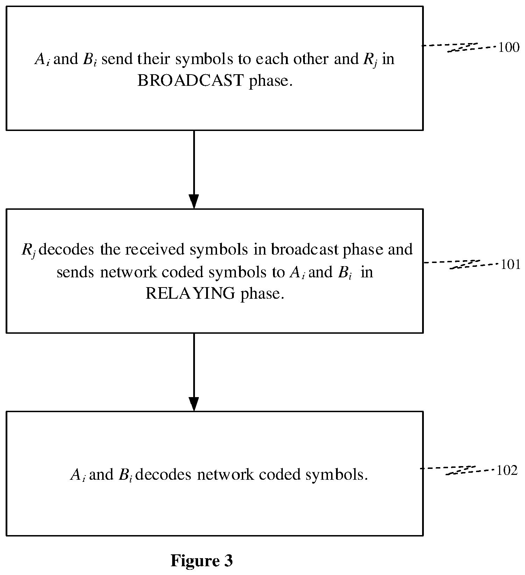

**Figure 3** shows the process flowchart of the present invention. The *Aᵢ* and *Bᵢ* exchanges their symbols with each other and *Rⱼ* is the broadcast phase **100.** The decoding of received symbols in broadcast phase is done by *Rⱼ* which sends the network coded symbol to *Aᵢ* and *Bᵢ* in the relaying phase **101.** The *Aᵢ* and *Bᵢ* decodes the network coded symbol **102.**

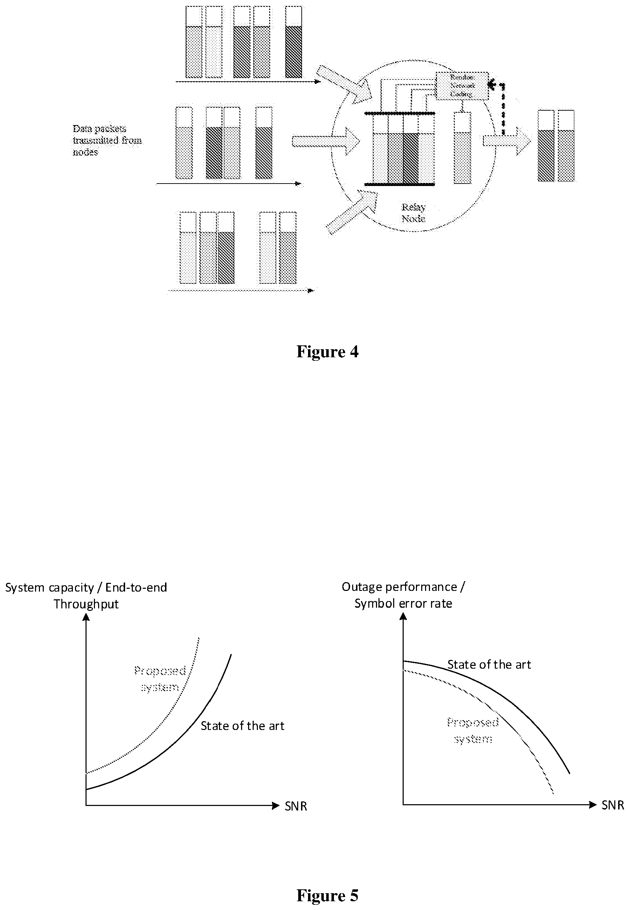

**Figure 4** shows an example of RNC **113** at relay nodes **114.** The invention applies RNC at relay nodes for multi-node systems which are different from the prior works about two-way relay channels.

**Figure 5** illustrates graphically the increase in overall system capacity and end-to-end throughput **115** by using Subcarrier and Power Allocation with relay selection with respect to signal to noise ratio (SNR). Additionally, improves the outage and symbol error performance **116** of the two-way relay channel networks.

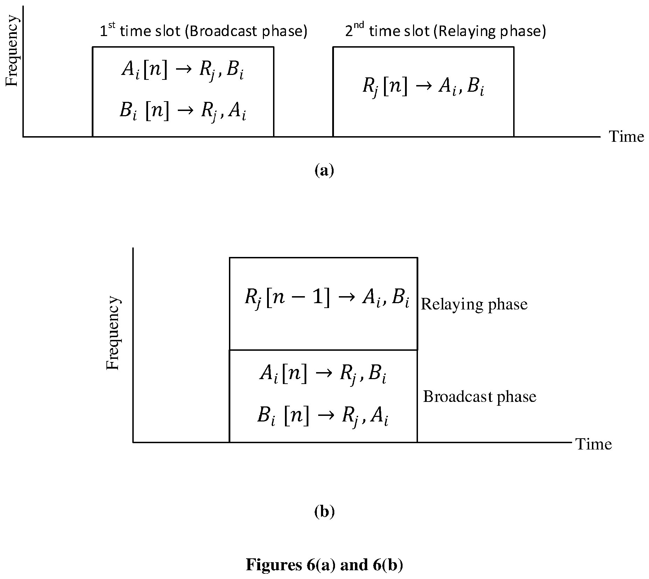

**Figures 6(a) and 6(b)** show the transmission scheme of two times required and the transmission scheme of one time required respectively. A single time slot can also be achieved through the use of full-duplex transmitting nodes. Full duplex transmission enables transmitting and receiving symbols in the same time interval different from half-duplex transmission. Hence relay nodes transmit network coded symbols while receiving the transmitted signals from *Aᵢ* and *Bᵢ*. An exemplary network coding scenario is given in previous work [25].

### REFERENCES

[1] http://www.cisco.com/web/TR/tomorrow-starts-here/ioe/index.html
[2] KOETTER M. and Medard M., An algebraic approach to network coding, IEEE/ACM Trans. on Networking, 11-5, pp: 782- 795, (2003).
[3] YAZDI A. A., Sorour S., Valaee S. and Kim R. Y., Optimum network coding for delay sensitive applications in Wi MAX unicast, IEEE INFOCOM, pp: 2576-2580 (2009).
[4] KATTI S., Katabi D., Balakrishnan H. and Medard M., Symbol-level network coding for wireless mesh networks, in Proc. ACM SIGCOMM, pp: 401-412, (2008).
[5] KIM R. Y., Kim Y. Y., Yazdi A. A., Sorour S. and Valaee S., Joint reduction of peak-to-average power ratio, cubic metric, and block error rate inOrthogonal frequency division multiplexing (OFDM) systems using network coding, IEEE Trans. Vehic. Tech., 60-9, pp: 4363-4373, (2011).
[6] XiNYU Z. and Li B., Network-coding-aware dynamic subcarrier assignment in OFDMA-based wireless networks, IEEE Trans. Vehic. Tech., 60-9, pp: 4609-4619, (2011).
[7] BYUNG-GOOK K. and Lee J.-W., Opportunistic resource scheduling for Orthogonal frequency division multiple access (OFDMA) networks with network coding at relay stations, IEEE Trans. on Wireless Commun., 11-1, pp: 210-221, (2012).
[8] JUANG R.-T., Yar K.-P., Lin H.-P. and Lin D.-B., Wireless broadcasting using XOR coding, Electronics Letters , 46-25, pp: 1700 -1702, (2010).
[9] ZHANG X. and Li B., On the benefits of network coding in multi-channel wireless networks, IEEE SECON, (2008).
[10] R1-082327, Application of network coding in LTE Advanced relay, 3GPP TSG-RAN WG1 #53b, Warsaw, Poland, (2008).
[11] JIN J. and Li B., Adaptive random network coding in WiMAX, IEEE ICC, (2008).
[12] JIN J., Li B. and Kong T., Is Random Network Coding Helpful in WiMAX?, Proc. of IEEE INFOCOM, (2008).
[13] HAMDOUN H., Loskot P. and O'Farrell T., Scalability of two-way relay channel network coding in a relay enhanced LTE cell, 11th International Symposium Communications and Information Technologies (ISCIT), pp: 168-173, (2011).
[14] ZHANG D. and Mandayam N. B., Resource allocation for multicast in an Orthogonal frequency division multiple access (OFDMA) network with Random Network Coding, IEEE INFOCOM, (2011) KHIRALLAH C., Vukobratov!c D., Thompson J., Performance Analysis and Energy Efficiency of Random Network Coding in LTE-Advanced, IEEE Trans. on Wireless Commun.,11-12, pp: 4275 - 4285, (2012).
[15] KHIRALLAH C., Vukobratov!c D., Thompson J., Performance Analysis and Energy Efficiency of Random Network Coding in LTE-Advanced, IEEE Trans. on Wireless Commun.,11-12, pp: 4275 - 4285, (2012).
[16] BAI B., Chen W., Letaief K. B. and Cao Z., Finite-SNR diversity-multiplexing tradeoff for Orthogonal frequency division multiplexing (OFDM) channels, 2010 IEEE ICC, (2010).
[17] BAI B., Chen W., Letaief K. B. and Cao Z., Outage exponent for Orthogonal frequency division multiplexing (OFDM) channels, 2010 IEEE GLOBECOM, (2010).
[18] BAI B., Chen W., Letaief, K. B. and Cao Z., Diversity-multiplexing trade-off in Orthogonal frequency division multiple access (OFDMA) Systems: An H-Matching approach, IEEE Trans. on Wireless Commun., 10-11, pp: 36753687, (2011).
[19] LIU Y. et al, Optimization framework and graph-based approach for relay-assisted bidirectional Orthogonal frequency division multiple access (OFDMA) cellular networks, IEEE Trans. Wireless Commun., 9-11, pp: 34903500, (2010).
[20] JÎTVANÎCHPHAÎBOOL K., Zhang R. and Liang Y. C., Optimal resource allocation for two-way relay-assisted OFDMA, IEEE Trans. Vehic. Technol., 58-7, pp: 3311-3321, (2009).
[21] KANG Y. and Lee D.& J. H., Resource allocation for two-wayOrthogonal frequency division multiplexing (OFDM) relay networks with fairness constraints, Vehicular Technology Conference Fall (VTC 2009- Fall), pp: 1-5, (2009).
[22] LI Z., Xia X.-G. and Li B., Achieving full diversity and fast ML decoding via simple analog network coding for asynchronous two-way relay networks, IEEE Trans. on Commun., 57-12, pp: 3672-3681, (2009)
[23] http://www.google.com.ar/Patents/US8040836
[24] https://www.google.com/Patents/US8527848
[25] Tedik, S.; Kurt, G.K., "Practical Full Duplex Physical Layer Network Coding,"in Proc. IEEE VTC, 18-21 May 2014.

## Claims

1. A cross-layer, two-way cooperative communication system having multiple transmit, receive and relay nodes and a Control Unit wherein:
a) Multiple transmitters are configured for transmitting data in two phases Broadcast phase, which involves all transmitting nodes utilizing pre-assigned OFDMA subcarriers, determining their transmit power values and bit rates, and transmitting multiple symbols; and Relaying phase, involves multiple pre-selected relay nodes first estimating multiple transmitted symbols by source nodes and then performing network coding on the estimated symbols to generate their signals to be transmitted;
b) Multiple receivers are configured for receiving data using a Detector (27), which works in conjunction with Network Decoding block (29) such that they obtain distinct versions of the source nodes' symbols;
c) A Relay-Selection module is configured for selecting a relay node from a plurality of relay nodes to improve the performance, based on inputs from a Performance Monitoring and Optimization block (11) wherein the Performance Monitoring and Optimization block is configured to select the relay and transmission of some relay nodes is avoided to eliminate any probable error propagation based on the channel conditions, and,
d) A control signal (10) is used by the relay nodes to produce a coding coefficient and is **characterised in that**
i) the control signal is used to produce the random network coding coefficients;
ii) the control signal enables synchronization among communicating nodes;
iii) a deterministic function is used on this time varying control signal to generate seed values.

2. A cross-layer, two-way cooperative communication system of Claim 1 wherein the proposed network coded system is used to determine the transmit power levels by estimating and monitoring the power of the data symbols that will be converted to transmitted signals over an antenna by the Generation of Coefficients of random network coding, RNC, (13), and reduce the peak to average power ratio, PAPR, values wherein if the power is above a pre-determined power threshold level then new random coefficients are produced, with a known functionality, for example by appending a pre-determined bit sequence to the frame.

3. A cross-layer, two-way cooperative communication system of Claim 1 wherein transmission further comprises Data Input (1), a Modulator (2), Power Allocation (3), a Serial to Parallel Converter (4), an Inverse Discrete Fourier Transform (5), a Parallel to Serial Converter (6), a module to add a Cyclic Prefix (7), a DAC (8), Transmitted OFDMA signals (9), a Performance Monitoring and Optimization (11) an Activity Detector block (12), a Generation of Coefficients of Random Network Coding (13), a Network Coding and Bit-Loading module (14), a Subcarrier Allocation module (15) Control Signal (10) wherein:
a) The information symbols to be transmitted are fed as the Data Input such that this data is passed to the Modulator block using appropriate modulation order;
b) The modulation order is determined according to the output of the Performance Monitoring and Optimization;
c) The Activity Detector block is configured to determine whether the transmitter will be selected to participate in the transmission process, functioning solely on the relay nodes;
d) The Network Coding and Bit Loading module is configured to integrate linear RNC into the transmission nodes;
e) The Control Signal is used by relay nodes to generate the RNC coefficients;
f) The Subcarrier Allocation is configured to assign the subcarriers to each user according to the measurements from the Performance Monitoring and Optimization block in order to enhance target performance metric; and
g) The Add Cyclic Prefix is configured to append a prefix or a suffix to the time domain OFDMA signal, also facilitating equalization.

4. A cross-layer, two-way cooperative communication system of Claim 1 wherein reception further comprises a received signal (16), an ADC (17), a Synchronization (18), module a module to remove Cyclic Prefix (19), a Serial to Parallel Converter (20), a DFT (21), a Parallel to Serial Converter (22), a Channel Estimator (23), a Control Signal (24), Bit Allocation Values (25), a Power Allocation module (26), a Detector (27), a module to Generation of Coefficients of RNC (28), a Network Coding Decoder (29), a Data Detector (30), Multiple Estimator bits (31), a Performance Monitoring and Optimization (32) block results wherein:
a) Multiple OFDMA receivers are integrated by the use of the Control Signal the Generation of Coefficients of RNC module, the Data Detection block, Performance Monitoring and Optimization block, and Feedback Signal (33) from optimize and monitor performance;
b) The Control Signal (24) is used by the relay nodes to generate the network coding coefficients wherein bit and power allocations are again determined as per the Control Signal;
c) The Generation of Coefficients of RNC module is configured to enable generation of the used RNC coefficients;
d) The Data Detection block is configured to enable high-reliability detection of the Estimated bits from all the source nodes, combining the received signals obtained from the two-phase transmission protocol;
e) The Estimated bits reconstruct the transmitted information bits;
f) The Detector is configured to estimate data symbols transmitted through the wireless communication channel;
g) The performance of the system is tracked by the Performance and Optimization block; and
h) The output of this block Feedback Signal is fed into the transmitter of the target transceiver unit, hence enabling the existence of optimization framework information.

5. A cross-layer, two-way cooperative communication system of Claim 1 wherein the Network Coding Decoder is configured to decode the network coded data and the output of it is fed into the Data Detection using detection techniques such as zero forcing, minimum mean square error, maximum likelihood or maximum a posteriori detection can be used along soft detection techniques.

6. A cross-layer, two-way cooperative communication system of Claim 1 wherein the transmit and receive nodes are filter bank multi-carrier based architectures having different prototype filters.

7. A cross-layer, two-way cooperative communication system of Claim 1 wherein the Control Unit is centralized such that it configured to generate the required signals to enable synchronization among communicating nodes and also to measure and monitor the system's performance.

8. A cross-layer, two-way cooperative communication system of Claim 1 wherein the Control Unit is de-centralized such that pilot symbols transmitted by the communicating nodes will be used for synchronization and performance is measured and monitored in a distributed manner.

9. A cross-layer, two-way cooperative communication method having multiple transmit, receive and relay nodes and a control unit, the method comprising:
a) transmitting data in two phases: Broadcast phase, which involves all transmitting nodes utilizing pre-assigned OFDMA subcarriers, determining their transmit power values and bit rates, and transmitting multiple symbols (100); and
Relaying phase, involves multiple pre-selected relay nodes first estimating multiple transmitted symbols by the source nodes and then performing network coding on the estimated symbols to generate their signals to be transmitted (101);
b) receiving data using a Detector (27), which works in conjunction with a Network Decoding block (29) such that they obtain distinct versions of the source nodes' symbols (102); selecting a relay node from a plurality of relay nodes to improve the performance, based on inputs from a performance monitoring and optimization block wherein the performance monitoring and optimization block selects the relay and transmission of some relay nodes is avoided to eliminate any probable error propagation based on the channel conditions and,
c) Using a control signal, at the relay nodes, as a coding coefficient producer **characterised in that**
i) the control signal is used to produce the random network coding coefficients;
ii) the control signal enables synchronization among communicating nodes;
iii) a deterministic function is used on this time varying control signal to generate seed values.

10. A cross-layer, two-way cooperative communication method of Claim 9 wherein determining the transmit power levels and reduction of PAPR values by the proposed network coded system wherein the Generation of of RNC estimates and monitores the power of the data symbols that will be converted to transmitted signals over an antenna wherein if the power is above a pre-determined power threshold level then new random coefficients are produced, with a known functionality, for example by appending a pre-determined bit sequence to the frame.

## Patentansprüche

1. Schichtübergreifendes, kooperatives bidirektionales Kommunikationssystem mit mehreren Sende-, Empfangs- und Weiterleitungsknoten und einer Steuereinheit, wobei:
a) mehrere Sender für die Übertragung von Daten in zwei Phasen ausgelegt sind: Rundsendephase, bei der alle Sendeknoten vorher zugewiesene OFDMA-Unterträger verwenden, ihre Sendeleistungswerte und Bitraten bestimmen und mehrere Symbole übertragen; und Weiterleitungsphase, bei der mehrere vorgewählte Weiterleitungsknoten zunächst mehrere durch Quellknoten übertragene Symbole schätzen und dann eine Netzwerkcodierung an den geschätzten Symbolen durchführen, um ihre zu übertragenden Signale zu erzeugen;
b) mehrere Empfänger zum Empfangen von Daten unter Verwendung eines Detektors (27) ausgelegt sind, der in Zusammenhang mit einem Netzwerkdecodierungsblock (29) arbeitet, sodass sie eindeutige Versionen der Symbole der Quellknoten erhalten;
c) ein Weiterleitungsauswahlmodul zum Auswählen eines Weiterleitungsknotens aus einer Vielzahl von Weiterleitungsknoten ausgelegt ist, um die Leistung basierend auf Eingaben aus einem Leistungsüberwachungs- und Optimierungsblock (11) zu verbessern, wobei der Leistungsüberwachungs- und Optimierungsblock dazu ausgelegt ist, die Weiterleitung auszuwählen, und die Übertragung einiger Weiterleitungsknoten vermieden wird, um jedwede wahrscheinliche Fehlerausbreitung basierend auf den Kanalbedingungen zu eliminieren, und,
d) ein Steuersignal (10) durch die Weiterleitungsknoten zum Erzeugen eines Codierkoeffizienten verwendet wird und **dadurch gekennzeichnet ist, dass**
i) das Steuersignal dazu verwendet wird, die Netzwerkzufallscodierkoeffizienten zu erzeugen;
ii) das Steuersignal die Synchronisation zwischen kommunizierenden Knoten ermöglicht;
iii) eine deterministische Funktion auf dieses zeitvariable Steuersignal angewendet wird, um Ausgangswerte zu erzeugen.

2. Schichtübergreifendes, kooperatives bidirektionales Kommunikationssystem gemäß Anspruch 1, wobei das vorgeschlagene netzwerkcodierte System dazu verwendet wird, die Sendeleistungspegel durch Schätzen und Überwachen der Leistung der Datensymbole zu bestimmen, die durch die Erzeugung von Netzwerkzufallscodierungskoeffizienten, RNC, (13) in übertragene Signale über eine Antenne umgewandelt werden, und die Werte des Verhältnisses von Spitzenleistung zu mittlerer Leistung, PAPR, zu reduzieren, wobei, wenn die Leistung oberhalb eines vorbestimmten Leistungsschwellenpegels liegt, neue Zufallskoeffizienten mit einer bekannten Funktionalität, zum Beispiel durch Anhängen einer vorbestimmten Bitsequenz an das Frame, erzeugt werden.

3. Schichtübergreifendes, kooperatives bidirektionales Kommunikationssystem gemäß Anspruch 1, wobei die Übertragung ferner eine Dateneingabe (1), einen Modulator (2), eine Leistungszuweisung (3), einen Seriell-Parallel-Wandler (4), eine inverse diskrete FourierTransformation (5), einen Parallel-Seriell-Wandler (6), ein Modul zum Hinzufügen eines zyklischen Präfixes (7), einen DAC (8), übertragene OFDMA-Signale (9), eine Leistungsüberwachung und -optimierung (11), einen Aktivitätsdetektorblock (12), eine Erzeugung von Netzwerkzufallscodierungs Koeffizienten (13), ein Netzwerkcodier- und Bitlademodul (14), ein Unterträgerzuweisungsmodul (15) und ein Steuersignal (10) umfasst, wobei:
a) die zu übertragenden Informationssymbole als Dateneingabe eingespeist werden, sodass diese Daten unter Verwendung einer geeigneten Modulationsreihenfolge an den Modulatorblock weitergeleitet werden;
b) die Modulationsreihenfolge gemäß der Ausgabe der Leistungsüberwachung und - optimierung bestimmt wird;
c) der Aktivitätsdetektorblock dazu ausgelegt ist, zu bestimmen, ob der Sender für die Teilnahme am Übertragungsvorgang ausgewählt wird, was ausschließlich auf den Weiterleitungsknoten arbeitet;
d) das Netzwerkcodier- und Bitlademodul dazu ausgelegt ist, den linearen RNC in die Übertragungsknoten zu integrieren;
e) das Steuersignal durch den Weiterleitungsknoten dazu verwendet wird, die RNC-Koeffizienten zu erzeugen;
f) die Unterträgerzuweisung dazu ausgelegt ist, die Unterträger jedem Benutzer gemäß den Messungen aus dem Leistungsüberwachungs- und -optimierungsblock zuzuweisen, um die Sollleistungsmetrik zu verbessern; und
g) die Funktion zum Hinzufügen eines zyklischen Präfix dazu ausgelegt ist, ein Präfix oder ein Suffix an das OFDMA-Signal im Zeitbereich anzuhängen, was auch die Entzerrung erleichtert.

4. Schichtübergreifendes, kooperatives bidirektionales Kommunikationssystem gemäß Anspruch 1, wobei der Empfang ferner ein Empfangssignal (16), einen ADC (17), eine Synchronisation (18), ein Modul zum Entfernen des zyklischen Präfix (19), einen Seriell-Parallel-Wandler (20), eine DFT (21), einen Parallel-Seriell-Wandler (22), einen Kanalschätzer (23), ein Steuersignal (24), Bitzuweisungswerte (25), ein Leistungszuweisungsmodul (26), einen Detektor (27), ein RNC-Koeffizientenerzeugungsmodul (28), einen Netzwerkcodierungsdecoder (29), einen Datendetektor (30), mehrere Schätzerbits (31), einen Leistungsüberwachungs- und -optimierungsblock (32) umfasst, wobei:
a) mehrere OFDMA-Empfänger durch die Verwendung des Steuersignals, die Erzeugung von Koeffizienten des RNC-Moduls, des Datenerkennungsblocks, des Leistungsüberwachungs- und -optimierungsblocks und des Rückmeldesignals (33) von der Optimierung und Überwachung der Leistung integriert sind;
b) das Steuersignal (24) durch die Weiterleitungsknoten dazu verwendet wird, die Netzwerkcodierungskoeffizienten zu erzeugen, wobei die Bit- und Leistungszuweisungen wiederum gemäß dem Steuersignal bestimmt werden;
c) das RNC-Koeffizientenerzeugungsmodul dazu ausgelegt ist, die Erzeugung der verwendeten RNC-Koeffizienten zu ermöglichen;
d) der Datenerkennungsblock dazu ausgelegt ist, eine hochzuverlässige Erkennung der geschätzten Bits aus allen Quellknoten durch Kombinieren der empfangenen Signale, die aus dem Zweiphasenübertragungsprotokoll erhalten wurden, zu ermöglichen;
e) die geschätzten Bits die übertragenen Informationsbits rekonstruieren;
f) der Detektor dazu ausgelegt ist, Datensymbole zu schätzen, die über den drahtlosen Kommunikationskanal übertragen werden;
g) die Leistung des Systems durch den Leistungs- und Optimierungsblock verfolgt wird; und
h) die Ausgabe dieses Blockrückmeldesignals in den Sender der Ziel-Transceiver-Einheit eingespeist wird und somit das Vorhandensein von Optimierungsrahmeninformationen ermöglicht.

5. Schichtübergreifendes, kooperatives bidirektionales Kommunikationssystem gemäß Anspruch 1, wobei der Netzwerkcodierungsdecoder dazu ausgelegt ist, die netzwerkcodierten Daten zu decodieren, und die Ausgabe davon in die Datendetektion eingespeist wird, wobei Detektionstechniken wie Null-Forcing, minimaler mittlerer quadratischer Fehler, maximale Wahrscheinlichkeit oder maximale a-posteriori-Detektion zusammen mit weichen Detektionsverfahren verwendet werden können.

6. Schichtübergreifendes, kooperatives bidirektionales Kommunikationssystem gemäß Anspruch 1, wobei die Sende- und Empfangsknoten filterbankbasierte Mehrträgerarchitekturen mit unterschiedlichen Prototypfiltern sind.

7. Schichtübergreifendes, kooperatives bidirektionales Kommunikationssystem gemäß Anspruch 1, wobei die Steuereinheit zentralisiert ist, sodass sie dazu ausgelegt ist, die erforderlichen Signale zu erzeugen, um die Synchronisation zwischen den kommunizierenden Knoten zu ermöglichen und auch die Leistung des Systems zu messen und zu überwachen.

8. Schichtübergreifendes, kooperatives bidirektionales Kommunikationssystem gemäß Anspruch 1, wobei die Steuereinheit dezentralisiert ist, sodass durch die kommunizierenden Knoten übertragene Pilotsymbole zur Synchronisation verwendet werden und die Leistung auf verteilte Weise gemessen und überwacht wird.

9. Schichtenübergreifendes, kooperatives Zweiwegekommunikationsverfahren mit mehreren Sende-, Empfangs- und Weiterleitungsknoten und einer Steuereinheit, wobei das Verfahren umfasst:
a) Übertragen von Daten in zwei Phasen: Rundsendephase, bei der alle Sendeknoten vorher zugewiesene OFDMA-Unterträger verwenden, ihre Sendeleistungswerte und Bitraten bestimmen und mehrere Symbole (100) übertragen; und Weiterleitungsphase, bei der mehrere vorgewählte Weiterleitungsknoten zunächst mehrere durch die Quellknoten übertragene Symbole schätzen und dann eine Netzwerkcodierung an den geschätzten Symbolen durchführen, um ihre zu übertragenden Signale (101) zu erzeugen;
b) Empfangen von Daten unter Verwendung eines Detektors (27), der in Zusammenhang mit einem Netzwerkdecodierungsblock (29) arbeitet, sodass sie eindeutige Versionen der Symbole der Quellknoten (102) erhalten;
Auswählen eines Weiterleitungsknotens aus einer Vielzahl von Weiterleitungsknoten, um die Leistung basierend auf Eingaben aus einem Leistungsüberwachungs- und Optimierungsblock zu verbessern, wobei der Leistungsüberwachungs- und Optimierungsblock die Weiterleitung auswählt und die Übertragung einiger Weiterleitungsknoten vermieden wird, um jedwede wahrscheinliche Fehlerausbreitung basierend auf den Kanalbedingungen zu eliminieren, und,
c) Verwenden eines Steuersignals in den Weiterleitungsknoten als Codierkoeffizientenerzeuger, **dadurch gekennzeichnet, dass**
i) das Steuersignal dazu verwendet wird, die Netzwerkzufallscodierkoeffizienten zu erzeugen;
ii) das Steuersignal die Synchronisation zwischen kommunizierenden Knoten ermöglicht;
iii) eine deterministische Funktion auf dieses zeitvariable Steuersignal angewendet wird, um Ausgangswerte zu erzeugen.

10. Schichtübergreifendes, kooperatives Zweiwegekommunikationsverfahren gemäß Anspruch 9, bei dem die Sendeleistungspegel und die Reduzierung der PAPR-Werte durch das vorgeschlagene netzwerkcodierte System bestimmt werden, wobei die Erzeugung des RNC die Leistung der Datensymbole, die in übertragene Signale umgewandelt werden, über eine Antenne schätzt und überwacht, wobei, wenn die Leistung oberhalb eines vorbestimmten Leistungsschwellenpegels liegt, neue Zufallskoeffizienten mit einer bekannten Funktionalität, zum Beispiel durch Anhängen einer vorbestimmten Bitsequenz an das Frame, erzeugt werden.

## Revendications

1. Système de communication coopérative bidirectionnelle à couches croisées ayant de multiples nœuds d'émission, de réception et de relais et une Unité de Commande, dans lequel
a) de Multiples émetteurs sont configurés pour transmettre des données en deux phases : une phase de Diffusion, qui implique que tous les nœuds d'émission utilisant des sous-porteuses OFDMA pré-affectées, déterminant leurs valeurs de puissance d'émission et leurs taux de bits, et transmettant des symboles multiples ; et une phase de Relais, qui implique que plusieurs nœuds de relais présélectionnés estimant d'abord des symboles multiples transmis par des nœuds sources et effectuant ensuite un codage de réseau sur les symboles estimés pour générer leurs signaux à transmettre ;
b) de Multiples récepteurs sont configurés pour recevoir des données utilisant un Détecteur (27), qui fonctionne conjointement avec un bloc de Décodage de Réseau (29) de telle sorte qu'ils obtiennent des versions distinctes des symboles de nœuds sources ;
c) un module de Sélection de Relais est configuré pour sélectionner un nœud de relais parmi une pluralité de nœuds de relais afin d'améliorer la performance, sur la base d'entrées provenant d'un bloc de Surveillance et d'Optimisation de Performance (11), dans lequel le bloc de Surveillance et d'Optimisation de Performance est configuré pour sélectionner le relais, et la transmission de certains nœuds de relais est évitée pour éliminer toute propagation d'erreur probable sur la base des conditions de canal, et,
d) Un signal de commande (10) est utilisé par les nœuds de relais pour produire un coefficient de codage et est **caractérisé en ce que** :
i) le signal de commande est utilisé pour produire les coefficients de codage de réseau aléatoire ;
ii) le signal de commande permet la synchronisation entre les nœuds communicants ;
iii) une fonction déterministe est utilisée sur ce signal de commande variant dans le temps pour générer des valeurs d'amorçage.

2. Système de communication coopérative bidirectionnelle à couches croisées selon la revendication 1, dans lequel le système codé en réseau proposé est utilisé pour déterminer les niveaux de puissance d'émission en estimant et en surveillant la puissance des symboles de données qui seront convertis en signaux émis sur une antenne par la Génération de Coefficients de codage de réseau aléatoire, RNC, (13), et réduire les valeurs de rapport de puissance de crête à moyenne, PAPR, dans lequel si la puissance est supérieure à un niveau de seuil de puissance prédéterminé, alors de nouveaux coefficients aléatoires sont produits, avec une fonctionnalité connue, par exemple en ajoutant une séquence de bits prédéterminée à la trame.

3. Système de communication coopérative bidirectionnelle à couches croisées selon la revendication 1, dans lequel la transmission comprende en outre une Entrée de Données (1), un Modulateur (2), une Allocation de Puissance (3), un Convertisseur Série-Parallèle (4), une Transformée de Fourier Discrète Inverse (5), un Convertisseur Parallèle-Série (6), un module pour ajouter un Préfixe Cyclique (7), un convertisseur numérique-analogique DAC (8), des signaux OFDMA Transmis (9), une Surveillance et d'Optimisation de Performance (11) un bloc de Détection d'Activité (12), une Génération de Coefficients de Codage de Réseau Aléatoire (13), un module de Codage de Réseau et de Chargement de Bits (14), un module d'Allocation de Sous-porteuses (15) et un Signal de Commande (10), dans lequel
a) Les symboles d'information à transmettre sont fournis en tant qu'Entrée de Données de telle sorte que ces données sont transmises au bloc Modulateur en utilisant un ordre de modulation approprié ;
b) L'ordre de modulation est déterminé en fonction de la sortie de Surveillance et d'Optimisation de Performance ;
c) le bloc Détecteur d'Activité est configuré pour déterminer si l'émetteur sera sélectionné pour participer au processus de transmission, en fonctionnant uniquement sur les nœuds relais ;
d) le module de Chargement et de Codage de Réseau est configuré pour intégrer un RNC linéaire dans les nœuds de transmission ;
e) le Signal de Commande est utilisé par les nœuds relais pour générer les coefficients de RNC ;
f) l'Allocation de Sous-porteuses est configurée pour affecter les sous-porteuses à chaque utilisateur en fonction des mesures du bloc de Surveillance et d'Optimisation de Performance afin d'améliorer la métrique de performance cible ; et
g) l'Ajout de Préfixe Cyclique est configuré pour ajouter un préfixe ou un suffixe au signal OFDMA du domaine temporel, facilitant également l'égalisation.

4. Système de communication coopérative bidirectionnelle à couches croisées selon la revendication 1, dans lequel la réception comprend en outre un signal reçu (16), un convertisseur analogique-numérique CAN (17), une synchronisation (18), module un module de suppression de Préfixe Cyclique (19), un Convertisseur Série-Parallèle (20), une transformée de Fourrier discrète TFD (21), un Convertisseur Parallèle-Série (22), un Estimateur de Canal (23), un Signal de Commande (24), des Valeurs d'Allocation de Bits (25), un module d'Allocation de Puissance (26), un Détecteur (27), un module de Génération de Coefficients de RNC (28), un Décodeur de Codage de Réseau (29), un Détecteur de Données (30), des bits d'Estimateur Multiples (31), des résultats de bloc de Surveillance et d'Optimisation de Performance (32) ;
a) de Multiples récepteurs OFDMA sont intégrés par l'utilisation du Signal de Commande du module de Génération de Coefficients de RNC, du bloc de Détection de Données, du bloc de Surveillance et d'Optimisation de Performance, et du Signal de Rétroaction (33) provenant de l'optimisation et de la surveillance des performances ;
b) le Signal de Commande (24) est utilisé par les nœuds relais pour générer les coefficients de codage de réseau, dans lequel des allocations de bits et de puissance sont à nouveau déterminées selon le Signal de Commande ;
c) le module de Génération de Goefficients de RNC est configuré pour permettre la génération des coefficients de RNC utilisés ;
d) le bloc de Détection de Données est configuré pour permettre la détection à haute fiabilité des bits Estimés de tous les nœuds sources, en combinant les signaux reçus obtenus à partir du protocole de transmission à deux phases ;
e) les bits Estimés reconstruisent les bits d'information transmis ;
f) le Détecteur est configuré pour estimer les symboles transmis par le canal de communication sans fil ;
g) La performance du système est suivie par le bloc de Performance et d'Optimisation; et
h) La sortie du Signal de Rétroaction de ce bloc est introduite dans l'émetteur de l'unité émettrice-réceptrice cible, ce qui permet l'existence d'informations sur le cadre d'optimisation.

5. Système de communication coopérative bidirectionnelle à couches croisées selon la revendication 1, dans lequel le Décodeur de Codage de Réseau est configuré pour décoder les données codées de réseau, et la sortie de celui-ci étant alimentée dans la Détection de Données en utilisant des techniques de détection telles que le forçage à zéro, l'erreur quadratique moyenne minimale, la probabilité maximale ou la détection a posteriori maximale peuvent être utilisées avec des techniques de détection douce.

6. Système de communication coopérative bidirectionnelle à couches croisées selon la revendication 1, dans lequel les nœuds d'émission et de réception sont des architectures à base de banques de filtres à porteuses multiples ayant des filtres prototypes différents.

7. Système de communication coopérative bidirectionnelle à couches croisées selon la revendication 1, dans lequel l'Unité de Commande est centralisée de telle sorte qu'elle est configurée pour générer les signaux requis pour permettre la synchronisation entre les nœuds de communication et également pour mesurer et surveiller la performance du système.

8. Système de communication coopérative bidirectionnelle à couches croisées selon la revendication 1, dans lequel l'Unité de Commande est décentralisée de telle sorte que les symboles pilotes transmis par les nœuds communicants seront utilisés pour la synchronisation et que la performance est mesurée et surveillée de manière distribuée.

9. Procédé de communication coopérative bidirectionnelle à couches croisées ayant de multiples nœuds d'émission, de réception et de relais et une unité de commande, le procédé comprenant :
a) la transmission de données en deux phases : une phase de Diffusion, qui implique tous les nœuds d'émission utilisant des sous-porteuses OFDMA pré-affectées, déterminant leurs valeurs de puissance d'émission et leurs taux de bits, et émettant de multiples symboles (100) ; et une phase de Relais, qui implique de multiples nœuds de relais présélectionnés estimant d'abord de multiples symboles émis par les nœuds sources et effectuant ensuite un codage de réseau sur les symboles estimés pour générer leurs signaux à émettre (101) ;
b) la réception de données à l'aide d'un Détecteur (27), qui fonctionne conjointement avec un bloc de Décodage de Réseau (29) de telle sorte qu'ils obtiennent des versions distinctes des symboles de nœuds sources (102) ;
la sélection d'un nœud de relais parmi une pluralité de nœuds de relais pour améliorer la performance, sur la base d'entrées provenant d'un bloc de surveillance et d'optimisation des performance, dans lequel le bloc de surveillance et d'optimisation de performance sélectionne le relais, et la transmission de certains nœuds de relais est évitée pour éliminer toute propagation d'erreur probable sur la base des conditions de canal et,
c) l'Utilisation d'un signal de commande, au niveau des nœuds de relais, en tant que producteur de coefficients de codage, **caractérisé en ce que** :
i) le signal de commande est utilisé pour produire les coefficients de codage de réseau aléatoire ;
ii) le signal de commande permet la synchronisation entre les nœuds communicants ;
iii) une fonction déterministe est utilisée sur ce signal de commande variant dans le temps pour générer des valeurs d'amorçage.

10. Procédé de communication coopérative bidirectionnelle à couches croisées selon la revendication 9, dans lequel déterminant des niveaux de puissance d'émission et la réduction des valeurs de PAPR par le système codé en réseau proposé, dans lequel la Génération de RNC estime et surveille la puissance des symboles de données qui seront convertis en signaux émis sur une antenne, dans lequel si la puissance est supérieure à un niveau de seuil de puissance prédéterminé, alors de nouveaux coefficients aléatoires sont produits, avec une fonctionnalité connue, par exemple en ajoutant une séquence de bits prédéterminée à la trame.
